# EUROPÄISCHE PATENTSCHRIFT

(11) **EP 0 814 985 B1**
(45) Veröffentlichungstag und Bekanntmachung des Hinweises auf die Patenterteilung: **30.12.1998**
(21) Anmeldenummer: 96903874.4
(22) Anmeldetag: 17.02.1996
(51) Int. Cl.: B60T 8/36, B60T 8/40, F04B 17/03, H02K 5/22

(54) **ELEKTROHYDRAULISCHES AGGREGAT**
ELECTROHYDRAULIC UNIT
ORGANE ELECTROHYDRAULIQUE

(30) Priorität: 16.03.1995 DE 19509556
(43) Veröffentlichungstag der Anmeldung: 07.01.1998
(73) Patentinhaber: ROBERT BOSCH GMBH, 70442 Stuttgart (DE)
(72) Erfinder: WETZEL, Gerhard, D-70825 Korntal-Münchingen (DE)
(86) Internationale Anmeldenummer: DE9600247
(87) Internationale Veröffentlichungsnummer: WO9628327

(56) Entgegenhaltungen:
- WO-A-94/27045
- DE-A- 3 725 385
- DE-A- 4 133 879
- DE-A- 4 234 013
- DE-U- 9 413 844
- GB-A- 2 287 358

## Beschreibung

### Stand der Technik

Die Erfindung geht aus von einem elektrohydraulischen Aggregat zur Bremsfluiddruckregelung in Bremsanlagen von Kraftfahrzeugen nach der Gattung des unabhängigen Anspruchs 1. Die Erfindung bezieht sich auch auf ein Verfahren zur Montage eines elektrohydraulischen Aggregats nach der Gattung des Anspruchs 6.

Ein derartiges elektrohydraulisches Aggregat zur ßremsfluiddruckregelung in Bremsanlagen von Kraftfahrzeugen sowie ein Verfahren zur Montage des elektrohydraulischen Aggregats ist aus der gattungsbildenden WO,A,94/27045, Figur 10 bekannt.

Dort ist ein Hydraulikblock vorgesehen, an dessen einer Seite ein Elektromotor und an dessen anderer, gegenüberliegender Seite eine Steuer- und Regelelektronikeinrichtung angebracht sind. Steif ausgebildete elektrische Anschlüsse des Elektromotors durchgreifen mit einem isolierten Abschnitt den Hydraulikblock. Ein isolationsfreier Endabschnitt der elektrischen Anschlüsse des Elektromotors greift im Inneren der Steuer- und Regelelektronikeinrichtung zwischen dort angeordnete elektrische Leiter von Anschlüssen weiterer elektrischer Bauteile. Die elektrischen Leiter sind quer zur Anbringrichtung der Steuer- und Regelelektronikeinrichtung am Hydraulikblock in Leiterführungen geführt. Beim Anbringen der Steuer- und Regelelektronikeinrichtung am mit dem Elektromotor versehenen Hydraulikblock greift der isolationsfreie Endabschnitt der elektrischen Anschlüsse des Elektromotors zwischen zwei elektrische Leiter der Anschlüsse weiterer elektrischer Bauteile und spreizt die elektrischen Leiter quer zur Anbringrichtung auf. Der Kontakt zwischen den isolationsfreien Endabschnitten der elektrischen Anschlüsse des Elektromotors und den elektrischen Leitern der Anschlüsse weiterer elektrischer Bauteile beruht daher lediglich auf Kraftschluß und vollzieht sich im Inneren der Steuer- und Regelelektronikeinrichtung kurz bevor diese am Hydraulikblock zur Anlage kommt. Eine Sichtkontrolle dieses Vorgangs ist schwerlich möglich.

Aus DE,A,41 33 879 ist ferner ein solches Aggregat bekannt. Dieses Aggregat weist einen Hydraulikblock, also ein mit Fluidkanälen und Fluidkammern als Dämpfer- oder Speicherkammern versehenes und beispielsweise mit Elektromagnetventilen bestücktes Bauteil auf, das zum hydraulischen Verschalten und zur mechanischen Befestigung von Bauteilen der Bremsanlage dient. Bei dem bekannten Aggregat ist auf einer Seite des Hydraulikblocks ein Elektromotor zum Antrieb einer im Hydraulikblock befindlichen Fluidpumpe angebracht. Steif ausgebildete elektrische Anschlüsses des Elektromotors ragen durch den Hydraulikblock auf dessen gegenüberliegende Seite hindurch, wo die Elektromagnetventile angebracht sind. Dadurch befinden sich elektrische Anschlüsse der Bauteile des bekannten Aggregats beisammen auf einer Seite des Hydraulikblocks.

Die elektrischen Anschlüsse werden von einem Verbindungsteil abgedeckt, das am Hydraulikblock anbringbar ist und mittels dessen die Bauteile elektrisch an weitere Bauteile anschließbar sind. Das Verbindungsteil kann zu diesem Zweck Vielfach-Steckanschlüsse aufweisen. Das Verbindungsteil ist schwenkbar am Hydraulikblock geführt. In einer aufgeschwenkten Stellung sind die elektrischen Anschlüsse zugänglich und können mit flexiblen Leitungen des Verbindungsteils beispielsweise verlötet werden. Die Verbindungen sind optisch kontrollierbar. Anschließend wird das Verbindungsteil an den Hydraulikblock anliegend verschwenkt, wobei es die elektrischen Anschlüsse der Elektromagnetventile und des Elektromotors abdeckt, und mit dem Hydraulikblock verbunden.

Vor dem Verlöten müssen bei dem bekannten Aggregat die flexiblen Leitungen des Verbindungsteils mit den elektrischen Anschlüssen der am Hydraulikblock angebrachten Bauteile in Kontakt gebracht werden, was Arbeitsaufwand mit sich bringt.

### Vorteile der Erfindung

Das erfindungsgemäße elektrohydraulische Aggregat mit den Merkmalen des unabhängigen Anspruchs 1 hat den Vorteil, daß die elektrischen Leiter seines Verbindungsteils in Anbringrichtung des Verbindungsteils am Hydraulikblock geführt sind, die durch Montageführungen vorgegeben ist. Auf diese Weise gelangen die elektrischen Leiter des Verbindungsteils mit den elektrischen Anschlüssen zumindest des Elektromotors in Kontakt, wenn das Verbindungsteil in die Montageführungen verbracht wird. In einer Montagestellung des Verbindungsteils sind die Kontaktstellen zugänglich und können beispielsweise verschweißt und optisch kontrolliert werden. Die Kontaktierung geht einfach vonstatten, sie eignet sich zur Automatisierung. Dabei ist der bauliche Aufwand für die Führung der Leiter des Verbindungsteils gering. Anschließend wird das Verbindungsteil in Anlage an den Hydraulikblock gebracht und an diesem befestigt. Es deckt die elektrischen Anschlüsse ab.

Die steif ausgebildeten elektrischen Anschlüsse des Elektromotors sind innerhalb eines Dichtrings angeordnet, der sich an einer am Hydraulikblock anliegenden Stirnseite des Elektromotors befindet. Im Verbindungsteil sind die elektrischen Anschlüsse des Elektromotors innerhalb eines vom Verbindungsteil am Hydraulikblock abgedichteten Raumes angeordnet. Dies bringt den Vorteil mit sich, daß keine separate Abdichtung der elektrischen Anschlüsse des Elektromotors benötigt wird.

Desweiteren benötigt die Verbindung der elektrischen Anschlüsse des Elektromotors mit den Leitern des Verbindungsteils keinen zusätzlichen Bauraum, da sie sich im Inneren des Verbindungsteils bzw. innerhalb der Stirnfläche des Elektromotors befinden.

Die Unteransprüche betreffen vorteilhafte Ausgestaltungen und Verbesserungen der im unabhängigen Anspruch 1 angegebenen Erfindung.

Gemäß Anspruch 3 sind die elektrischen Leiter des Verbindungsteils wendelförmig um Führungsstifte des Verbindungsteils gewickelt, die in Bohrungen im Hydraulikblock eingreifen. Auf diese Weise werden die Leiter in Anbringrichtung des Verbindungsteils am Hydraulikblock geführt, die durch die in die Bohrungen im Hydraulikblock eingreifenden Führungsstifte vorgegeben ist.

Indem freie, mit den elektrischen Anschlüssen des Elektromotors zu kontaktierende Enden der Leiter gemäß Anspruch 4 durch Längsschlitze in den Führungsstiften ragen, wird die Führung der Leiter am Verbindungsteil exakter.

Ein Verfahren zur Montage eines erfindungsgemäßen elektrohydraulischen Aggregats wird in Anspruch 6 beschrieben.

### Zeichnung

Die Erfindung wird nachfolgend anhand eines in der Zeichnung dargestellten Ausführungsbeispiels näher erläutert. Es zeigen:
Figur 1 eine teilweise geschnittene Seitenansicht eines erfindungsgemäßen, elektrohydraulischen Aggregats, wobei die linke Bildhälfte den fertigen Zustand und die rechte Bildhälfte eine Vormontierte Position zeigt; und
Figur 2 einen perspektivischen Ausschnitt aus Figur 1 im Bereich elektrischer Anschlüsse, nicht maßstäblich.

### Beschreibung des Ausführungsbeispiels

In der Zeichnung ist ein elektrohydraulisches Aggregat zur Regelung des Bremsfluiddrucks in Bremsanlagen von Kraftfahrzeugen gemäß der Erfindung dargestellt. Es weist einen Hydraulikblock 10 auf, auf dessen einer Seite ein Elektromotor 12 zum Antrieb einer, in der Zeichnung nicht dargestellten, im Hydraulikblock 10 befindlichen Fluidpumpe angebracht ist. Elektrische Anschlüsse 14 des Elektromotors 12 befinden sich auf dessen dem Hydraulikblock 10 zugewandter Stirnseite 16. Sie sind als Metallstifte ausgebildet, die senkrecht auf der Stirnfläche 16 stehen und die etwas länger sind, als der Hydraulikblock 10 dick ist. Sie ragen durch zwei Durchgangsbohrungen 18 im Hydraulikblock 10 hindurch und stehen an dessen, dem Elektromotor 12 gegenüberliegender Seite 20 vor. In dem Bereich, in welchem sich die Anschlußstifte 14 innerhalb des Hydraulikblocks 10 befinden, sind sie beispielsweise durch Aufstecken einer Kunststoffhülse 22 oder durch Umspritzen mit Kunststoff elektrisch isoliert.

Aus der Kunststoffhülse 22 und dem Hydraulikblock 10 vorstehende, dem Elektromotor 12 ferne Enden 24 der Anschlußstifte 14 sind gabelförmig ausgebildet, sie dienen zum elektrischen Anschluß des Elektromotors 12. In die gegabelten Enden 24 ist ein abstehendes Ende 26 einer aus Leiterdraht gewickelten Wendel 28 eingelegt und mit ihm verschweißt.

Ein anderes, ebenfalls abstehendes Ende 30 der Wendel 28 ist mit einem Stanzgitter 32 verschweißt, das parallel und mit Abstand zu der dem Elektromotor 12 gegenüberliegenden Seite 20 des Hydraulikblocks 10 angeordnet ist, an der die gegabelten Enden 24 der Anschlußstifte 14 des Elektromotors 16 vorstehen. Das Stanzgitter 32 weist elektrisch gegeneinander isolierte Blechstreifen auf, die Leiterbahnen zum Verschalten elektrischer Bauteile des erfindungsgemäßen elektrohydraulischen Aggregats bilden. Das Stanzblech 32 ist mit Kunststoff 34 umspritzt, der die einzelnen Leiterbahnen des Stanzblechs 32 elektrisch voneinander isoliert.

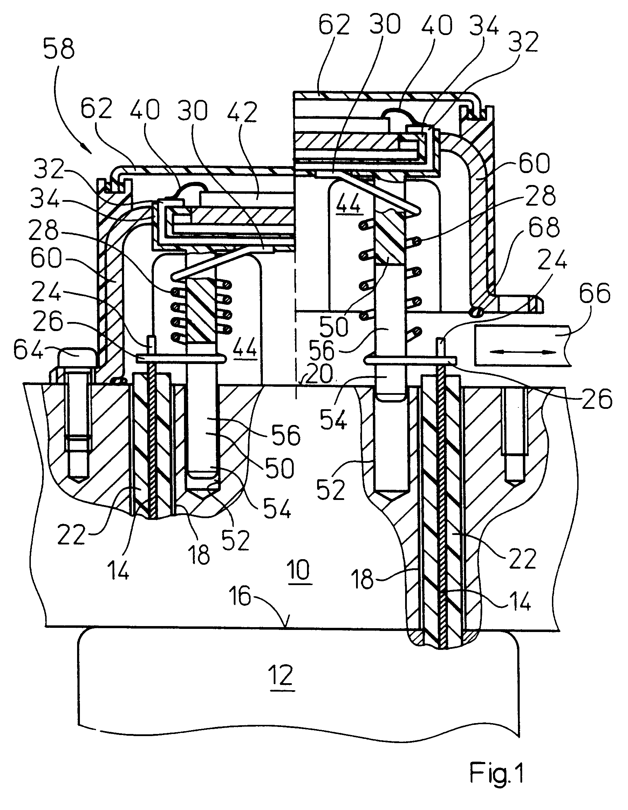

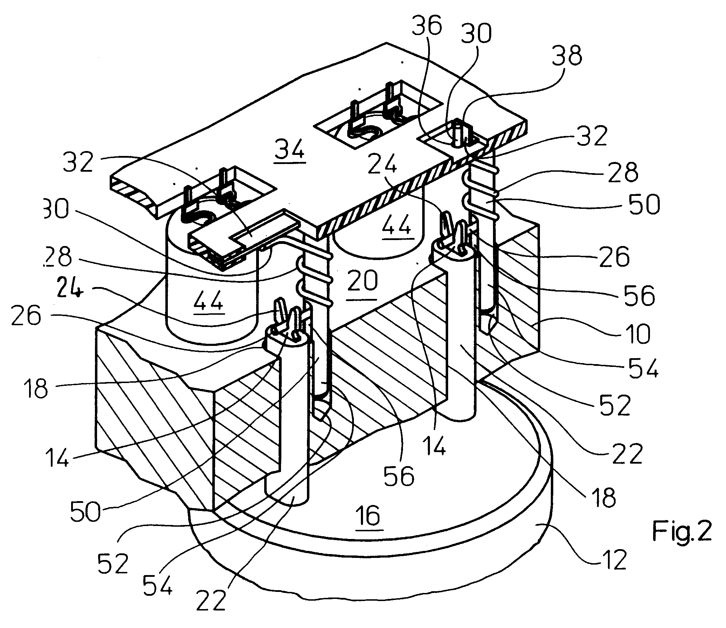

In Figur 2 sind beispielhaft zwei Verbindungsmöglichkeiten der Wendein 28 mit Leiterbahnen des Stanzgitters 32 dargestellt. Diese sind im Kontaktierungsbereich nicht mit Kunststoff 34 umgeben. Das Ende 30 der in Figur 2 links dargestellten Wendel 28 liegt eben am Stanzblech 32 an und ist mit diesem verschweißt. Das Ende 30 der in Figur 2 rechts dargestellten Wendel 28 ragt durch ein Loch 36 Im Kunststoff 34 hindurch, es steht senkrecht zu einer Ebene, in der sich das Stanzgitter 32 im Wesentlichen befindet. Eine Zunge 38 einer Leiterbahn des Stanzblechs 32 ist senkrecht nach oben stehend abgewinkelt, an ihr liegt das Ende 30 der Wendel 28 an und ist mit ihr verschweißt. Üblicherweise werden alle elektrischen Verbindungsstellen zwischen den Wendein 28 und dem Stanzblech 32 in gleicher Weise ausgeführt, wie dies in Figur 1 dargestellt ist.

Mittels Kontaktfahnen 40 sind Leiterbahnen des Stanzgitters 32 an eine in Kunststoff eingegossene elektronische Steuer- oder Regelschaltung 42 angeschlossen, die sich mit geringem Abstand über dem Stanzgitter 32 befindet. In Figur 2 ist die elektronische Schaltung 42 zur besseren Darstellbarkeit weggelassen. Mit den Leiterbahnen des Stanzgitters 32 sind ferner Magnetspulen 44 Von am Hydraulikblock 10 angeordneten Elektromagnetventilen elektrisch leitend verbunden.

Einstückig mit dem das Stanzgitter 32 umgebenden Kunststoff 34 sind zwei zylindrische Führungsstifte 50 an den Kunststoff 34 angespritzt. Sie ragen in zylindrische Sackbohrungen 52, die parallel zu den die Anschlußstifte 14 des Elektromotors 12 aufnehmenden Durchgangsbohrungen 18 im Hydraulikblock 10 angebracht sind, stehen also senkrecht zu der dem Elektromotor 12 gegenüberliegenden Seite 20 des Hydraulikblocks 10. Die beiden Wendeln 28 umgeben die Führungsstifte 50, sie werden von den Führungsstiften 50 geführt. Freie Enden 54 der Führungsstifte 50 weisen einen Längsschlitz 56 auf, durch welchen die abstehenden, mit den Anschlußstiften 14 des Elektromotors 12 verschweißten Enden 26 der Wendeln 28 quer hindurchgeführt sind. Die Schlitze 56 bilden Führungen für diese Enden 26 der Wendeln 28.

Die Magnetspulen 44 bilden zusammen mit der elektronischen Schaltung 42 ein elektrisches Anbau-Steuergerät 58, welches in einem Gehäuse 60 untergebracht ist, das mit einem angeklebten Deckel 62 abgedeckt ist. Das Anbau-Steuergerät 58 ist mittels der Führungsstifte 50 am Hydraulikblock 10 positioniert und mittels Schrauben 64 mit ihm verschraubt.

Der Zusammenbau des erfindungsgemäßen elektrohydraulischen Aggregats geschieht auf folgende Weise: Nachdem der Elektromotor 12 am Hydraulikblock 10 angebracht worden ist, wobei dessen isolierte Anschlußstifte 14 durch den Hydraulikblock 10 hindurchgesteckt worden sind, wird das Anbau-Steuergerät 58 auf der gegenüberliegenden Seite 20 am Hydraulikblock 10 angebracht. Dabei gelangen zunächst die freien Ende 54 der Führungsstifte 50 in die Sackbohrungen 52 im Hydraulikblock 10, wodurch das Anbau-Steuergerät 58 in Bezug auf den Hydraulikblock 10 positioniert ist. Zugleich gelangen die bislang noch freien Enden 26 der Wendeln 28 in die gabelförmigen Enden 24 der Anschlußstifte 14 des Elektromotors 12, wenn sich das Gehäuse 60 des Steuergeräts 58 noch in Abstand vom Hydraulikblock 10 befindet (rechte Bildhälfte von Figur 1).

In dieser Stellung sind die miteinander zu Verbindenden Enden 24, 26 der Wendeln 28 und der Anschlußstifte 14 gut von der Seite des Gehäuses 60 des Anbau-Steuergeräts 58 her zugänglich, so daß sie sich einfach mittels einer Schweißzange 66 verschweißen lassen. Die Verschweißung ist in dieser Stellung optisch kontrollierbar. Nach dem Verschweißen wird die Schweißzange 66 entfernt, das Anbau-Steuergerät 58 an den Hydraulikblock 10 gedrückt und mit diesem verschraubt. Die Wendeln 28 gewährleisten den für das Anbringen des Anbau-Steuergeräts 58 notwendigen Wegausgleich.

Sämtliche elektrischen Anschlüsse sind vom Gehäuse 60 des Steuergeräts 58 abgedeckt, welches mittels einer eingelegten Dichtung 68 gegen den Hydraulikblock 10 abgedichtet ist. Durch die Erfindung lassen sich die elektrischen Anschlüsse einfach und zuverlässig bewerkstelligen.

Anstelle des Anbau-Steuergeräts 58 kann beispielsweise auch ein Vielfachstecker in gleicher Weise mit den Anschlußstiften 14 des Elektromotors 12 verbunden und am Hydaulikblock 10 angebracht werden.

## Patentansprüche

1. Elektrohydraulisches Aggregat zur Bremsfluiddruckregelung in Bremsanlagen von Kraftfahrzeugen,
mit einem Hydraulikblock (10),
mit einem Elektromotor (12), der an einer Seite (16) des Hydraulikblocks (10) angebracht ist und dessen elektrische Anschlüsse (14) steif ausgebildet sind sowie mit einem isolierten Abschnitt durch den Hydraulikblock (10) hindurchragen, und
mit einem Verbindungsteil (58) zum Verbinden eines isolationsfreien Endabschnitts (24) der elektrischen Anschlüsse (14) des Elektromotors (12) mit weiteren elektrischen Bauteilen, wobei das Verbindungsteil (58) nachgiebig ausgebildete elektrische Leiter (28) sowie Leiterführungen (50, 56) aufweist, mittels derer die elektrischen Leiter (28) geführt sind, wenn diese beim Anbringen des Verbindungsteils (58) am Hydraulikblock (10) mit den isolationsfreien Endabschnitten (24) der elektrischen Anschlüsse (14) des Elektromotors 12 in Kontakt gelangen, welche vom am Hydraulikblock (10) angebrachten Verbindungsteil (58) abgedeckt sind,
dadurch gekennzeichnet, daß
eine im Verbindungsteil (58) und im Hydraulikblock (10) angebrachte Montageführung (50, 52) vorhanden ist, die das Verbindungsteil (58) beim Anbringen am Hydraulikblock (10) führt,
daß die Leiterführungen (50, 56) des Verbindungsteils (58) zu der Montageführung (50, 52) gehören,
daß die Leiter (28) des Verbindungsteils (58) in Anbringrichtung des Verbindungsteils (58) am Hydraulikblock (10) nachgiebig sind und
daß die elektrischen Leiter (28) beim Anbringen des Verbindungsteils (58) am Hydraulikblock (10) mit den isolationsfreien Endabschnitten (24) der elektrischen Anschlüsse (14) des Elektromotors (12) fest verbunden werden, bevor das Verbindungsteil (58) die isolationsfreien Endabschnitte (24) der elektrischen Anschlüsse (14) des Elektromotors (12) abdeckt.

2. Aggregat nach Anspruch 1, dadurch gekennzeichnet, daß die isolationsfreien Endabschnitte (24) der elektrischen Anschlüsse (14) des Elektromotors (12) gabelartig ausgebildet sind.

3. Aggregat nach Anspruch 1 oder 2, dadurch gekennzeichnet, daß die elektrischen Leiter (28) des Verbindungsteils (58) wendelförmig um die Leiterführungen (50, 56) bildende Führungsstifte (50) gewickelt sind und daß die Führungsstifte (50) in Bohrungen (52) im Hydraulikblock (10) hineinragen.

4. Aggregat nach Anspruch 3, dadurch gekennzeichnet, daß freie Enden (26) der elektrischen Leiter (28) quer durch Längsschlitze (56) in den Führungsstiften (50) ragen.

5. Aggregat nach einem der Ansprüche 1 bis 4, dadurch gekennzeichnet, daß das Verbindungsteil (58) ein Anbausteuergerät und ein Gehäuse (60) aufweist, das die elektrischen Anschlüsse (14) des Elektromotors (12) im fertig montierten Zustand abdeckt.

6. Verfahren zur Montage eines elektrohydraulischen Aggregats nach einem der vorhergehenden Ansprüche, dadurch gekennzeichnet, daß die Montageführungen (50, 52) des Verbindungsteils (58) und des Hydraulikblocks (10) miteinander in Eingriff gebracht werden, daß das Verbindungsteil (58) in einer offenen Stellung zum Hydraulikblock (10) gehalten wird, daß die elektrischen Leiter (28) des Verbindungsteils (58) mit den elektrischen Anschlüssen (14) des Elektromotors (12) fest verbunden werden und daß das Verbindungsteil (58) in seine die elektrischen Anschlüsse (14) des Elektromotors (12) abdeckende Lage gebracht und mit dem Hydraulikblock (10) verbunden wird.

## Claims

1. Electrohydraulic unit for controlling brake fluid pressure in brake systems of motor vehicles, having a hydraulic block (10), having an electric motor (12) which is fitted on one side (16) of the hydraulic block (10) and whose electric connections (14) are of rigid design and project through the hydraulic block (10) by means of an insulated section, and having a connecting part (58) for connecting an uninsulated end section (24) of the electric connections (14) of the electric motor (12) to further electric components, the connecting part (58) having flexibly designed electric conductors (28) and conductor guides (50, 56) by means of which the electric conductors (28) are guided when the latter come into contact, during fitting of the connecting part (58) on the hydraulic block (10), with the uninsulated end sections (24) of the electric connections (14) of the electric motor (12), which are covered by the connecting part (58) fitted on the hydraulic block (10), characterized in that a mounting guide (50, 52) is present which is fitted in the connecting part (58) and in the hydraulic block (10) and guides the connecting part (58) during fitting on the hydraulic block (10), in that the conductor guides (50, 56) of the connecting part (58) belong to the mounting guide (50, 52), in that the conductors (28) of the connecting part (58) are flexible in the direction in which the connecting part (58) is fitted on the hydraulic block (10) and in that during fitting of the connecting part (58) on the hydraulic block (10) the electric conductors (28) are permanently connected to the uninsulated end sections (24) of the electric connections (14) of the electric motor (12) before the connecting part (58) covers the uninsulated end sections (24) of the electric connections (14) of the electric motor (12).

2. Unit according to Claim 1, characterized in that the uninsulated end sections (24) of the electric connections (14) of the electric motor (12) are of fork-type design.

3. Unit according to Claim 1 or 2, characterized in that the electric conductors (28) of the connecting part (58) are wound helically around guide pins (50) forming the conductor guides (50, 56), and in that the guide pins (50) project into bores (52) in the hydraulic block (10).

4. Unit according to Claim 3, characterized in that free ends (26) of the electric conductors (28) project transversely through longitudinal slots (56) in the guide pins (50).

5. Unit according to one of Claims 1 to 4, characterized in that the connecting part (58) has a built-on control device and a housing (60) which covers the electric connections (14) of the electric motor (12) in the finally mounted state.

6. Method for mounting an electrohydraulic unit according to one of the preceding claims, characterized in that the mounting guides (50, 52) of the connecting part (58) and of the hydraulic block (10) are brought into engagement with one another, in that the connecting part (58) is held in an open position relative to the hydraulic block (10), in that the electric conductors (28) of the connecting part (58) are permanently connected to the electric connections (14) of the electric motor (12), and in that the connecting part (58) is brought into its position covering the electric connections (14) of the electric motor (12) and is connected to the hydraulic block (10).

## Revendications

1. Elément électrohydraulique pour réguler la pression de liquide de frein dans des installations de frein de véhicules automobiles comprenant :
- un bloc hydraulique (10),
- un moteur électrique (12) dont un côté (16) est monté sur le bloc hydraulique (10) et dont les branchements électriques (14) sont réalisés de manière rigide, et traversent avec un segment isolé, le bloc hydraulique (10), et
- une partie de connexion (58) pour relier un segment d'extrémité dénudé (24) des branchements électriques (14) du moteur électrique (12) à d'autres composants électriques,
- la partie de connexion (58) comportant des conducteurs électriques (28) souples et des guides de conducteur (50, 56) à l'aide desquels les conducteurs hydrauliques (28) sont guidés lorsqu'ils arrivent lors de la mise en place de la partie de connexion (58) contre le bloc hydraulique (10) en arrivant en contact avec les segments d'extrémité (24) dénudés des branchements électriques (14) du moteur électrique (12), extrémités qui sont recouvertes par la partie de connexion (58) du bloc hydraulique (10),
caractérisé en ce que
- la partie de liaison (58) et le bloc hydraulique (10) comportent un guide de montage (50, 52) qui guide la partie de connexion (58) pour le montage sur le bloc hydraulique (10),
- les guides de conducteur (50, 56) de la partie de connexion (58) font partie des guides de montage (50, 52),
- les conducteurs (28) de la partie de connexion (58) sont souples dans la direction de montage de la partie de connexion (58) sur le bloc hydraulique (10), et
- les conducteurs électriques (28), lors du montage de la partie de connexion (58) sur le bloc hydraulique (10) sont reliés solidement aux segments d'extrémité dénudés (24) des branchements électriques (14) du moteur électrique (12) avant que la partie de connexion (58) ne recouvre les segments d'extrémité dénudés (24) des branchements électriques (14) du moteur électrique (12).

2. Elément selon la revendication 1,
caractérisé en ce que
les segments d'extrémité dénudés (24) de branchements électriques (14) du moteur électrique (12) sont en forme de fourche.

3. Elément selon les revendications 1 ou 2,
caractérisé en ce que
les conducteurs électriques (28) de la partie de connexion (58) sont enroulés en hélice autour des guides de conducteur (50, 56) formés par des broches de guidage (50) et ces broches (50) pénètrent dans des perçages (52) du bloc hydraulique (10).

4. Elément selon la revendication 3,
caractérisé en ce que
les extrémités libres (26) des conducteurs électriques (28) traversent transversalement des fentes longitudinales (56) des broches de guidage (50).

5. Elément selon l'une quelconque des revendications 1 à 4,
caractérisé en ce que
la partie de connexion (58) comporte un appareil de commande, rapporté et un boîtier (60) recouvrant les branchements électriques (14) du moteur électrique (12) lorsque le montage est terminé.

6. Procédé de montage d'un élément électrohydraulique selon l'une quelconque des revendications précédentes,
caractérisé en ce que
les guides de montage (50, 52) de la partie de connexion (58) et du bloc hydraulique (10) sont mis en prise, la partie de connexion (58) est maintenue en position ouverte par rapport au bloc hydraulique (10), puis on relie solidairement les conducteurs électriques (28) de la partie de connexion (58) aux branchements électriques (14) du moteur électrique (12) et on met la partie de connexion (58) dans sa position recouvrant les branchements électriques (14) du moteur électrique (12), puis on relie au bloc hydraulique (10).
